## Europäisches Patentamt

## European Patent Office

## Office européen des brevets

(11) Veröffentlichungsnummer: **0 072 384**
A1

(12) **EUROPÄISCHE PATENTANMELDUNG**

(21) Anmeldenummer: **81710038.1**

(22) Anmeldetag: **14.08.81**

(51) Int. Cl.³: **C 25 D 11/18**

(43) Veröffentlichungstag der Anmeldung:
**23.02.83 Patentblatt 83/8**

(84) Benannte Vertragsstaaten:
**AT BE CH FR GB IT LI LU NL SE**

(71) Anmelder: **COWA Chemische Fabrikation Felix Conrady**

**D-7703 Rielasingen-Worblingen(DE)**

(72) Erfinder: **Conrady, Felix**
**Steinerweg 38**
**D-7702 Gottmadingen(DE)**

(74) Vertreter: **Hiebsch, Gerhard F., Dipl.-Ing.**
**Erzbergerstrasse 5A Postfach 464**
**D-7700 Singen 1(DE)**

(54) **Konservierungsmittel für Metalloberflächen sowie Verfahren zu deren Beschichtung.**

(57) Das Konservierungsmittel enthält eine metallsalzhaltige Dispersion mit etwa 10 bis 25 Gew.-% Acrylat-Copolymeren in voll entsalztem Wasser.

Zum Beschichten einer Metalloberfläche mit dem Konservierungsmittel wird die Oberfläche mit einem nicht perlenden Reinigungsmittel behandelt und anschließend rückstandsfrei abgezogen sowie getrocknet, woraufhin auf die Oberfläche 1 bis 45 g/m² des Konservierungsmittels aufgebracht wird.

EP 0 072 384 A1

D-7700 SINGEN 1
Erzbergerstr. 5a
Telegr./Cables:
Bodenseepatent
Telex 7 93 850
Telefon (07731) 63075
                63076

COWA Chemische Fabrikation
==========================

Felix Conrady
=============

Mein Zeichen
My ref./Ma réf.: C-107/EPA

7703 Rielasingen-Worblingen
============================

V/ch
Datum/Date

---

Konservierungsmittel für Metalloberflächen sowie Verfahren zu deren Beschichtung

---

Die Erfindung betrifft ein Konservierungsmittel für Metalloberflächen, insbesondere eloxierte Aluminiumoberflächen, sowie ein Verfahren zum Beschichten einer derartigen Metalloberfläche.

Oberflächen dieser Art müssen im allgemeinen häufig gereinigt und jeweils anschließend konserviert werden. Die üblichen Konservierungsmittel müssen beim nächstfolgenden Reinigungsvorgang -- mit erheblichem Aufwand -- entfernt und danach wieder aufgebracht werden. Als weiterer Nachteil hat sich gezeigt, daß derartige Konservierungsschichten nur unzulänglichen Schutz bieten.

Zur konservierenden Behandlung von eloxierten Aluminiumblechen werden üblicherweise in organischen Lösungsmitteln gelöste Wachse verwendet; diese führen nach Verdun-

-2-

stung des Lösungsmittels zu einem dünnen Film. Derartige Wachsschichten haben sich jedoch in der Praxis nicht besonders bewährt, da an ihnen infolge ihrer leicht klebrigen Konsistenz Staub- und Schmutzpartikel haften bleiben und die mit Wachs konservierten Oberflächen bereits nach verhältnismäßig kurzer Zeit einen recht hohen Verschmutzungsgrad aufweisen.

Angesichts dieser Nachteile des Standes der Technik hat sich der Erfinder nun das Ziel gesetzt, ein neuartiges Konservierungsmittel mit staub- und schmutzabweisenden Eigenschaften zu finden, sowie ein einfaches Verfahren zum Behandeln der Metalloberflächen zum Zwecke der Konservierung.

Zur Lösung dieser Aufgabe führt, daß das Konservierungsmittel eine metallsalzhaltige Dispersion mit etwa 10 bis 25 Gew.-% Acrylat-Copolymeren in voll entsalztem Wasser enthält.

Darüberhinaus kann die Dispersion einen Gehalt an Polymethacrylester von etwa 0,5 bis 5 Gew.-% aufweisen und/oder wenigstens eines der Merkmale der Ansprüche 4 bis 7.

Der bevorzugte Gesamtfestkörpergehalt der Dispersion liegt bei etwa 10 bis 30 Gew.-%, insbesondere 10 bis 15 Gew.-%.

Bei einem besonders bevorzugten Ausführungsbeispiel enthält das Konservierungsmittel jedes dieser Bestandteile bzw. Merkmale.

Das Verfahren zum Beschichten einer Metalloberfläche mit dem Konservierungsmittel zeichnet sich dadurch aus, daß die Oberfläche zuerst mit einem nicht perlenden Reinigungsmittel behandelt wird, wie man es zum Beispiel für das Gläserspülen verwenden kann. Daraufhin wird die Oberfläche klargespült und mit einem Fensterwischer od. dgl. rückstandsfrei abgezogen, woraufhin man die Kanten oder auch die gesamte Fläche mit einem Leder od. dgl. trocknet. Dann werden auf die Oberfläche 1 bis 45 $g/m^2$, bevorzugt 1 bis 10 $g/m^2$, insbesondere 1,8 bis 2,2 $g/m^2$, des Konservierungsmittels aufgetragen, wozu ein saugender Lappen, beispielsweise ein Filzeinsatz od. dgl., Verwendung findet.

Das Konservierungsmittel kann auf einfache Weise so hergestellt werden, daß in das voll entsalzte Wasser das Verlaufmittel eingerührt und anschließend Glykol beigegeben wird, wonach die metallsalzhaltige Acrylat-Copolymer-Dispersion, dann das Dispergierhilfsmittel und schließlich das Netzmittel unter Rühren beigemischt werden.

In der Praxis hat es sich gezeigt, daß nach dem Auftragen dieses Konservierungsmittels an der Fassade höchstens noch 20 % der Menge an Schmutz haften bleiben, welche bei anderen Fassaden oder Oberflächen im Laufe der Standzeit eine Schmutzschicht bilden.

Als weiterer Vorteil ist anzusehen, daß die in den Folgejahren wieder erforderlich werdende Reinigung -- natürlich in Abhängigkeit vom Verschmutzungsgrad -- wie eine normale Fensterreinigung durchzuführen ist, also wesentlich weniger Aufwand erfordert, als dies bisher unerlässlich schien.

-4-

Das aufgebrachte Konservierungsmittel führt zu einer, zum einen hervorragenden Schutz bietenden, zum anderen aber wiederum gut entfernbaren Schutzschicht, welche in dieser Form und Wirkung bisher nicht bekannt war.

P A T E N T A N S P R Ü C H E
=================================

1. Konservierungsmittel für Metalloberflächen, insbesondere eloxierte Aluminiumoberflächen,

   dadurch gekennzeichnet,

   daß es eine metallsalzhaltige Dispersion mit etwa 10 bis 25 Gew.-% Acrylat-Copolymeren in voll entsalztem Wasser enthält.

2. Konservierungsmittel nach Anspruch 1, gekennzeichnet durch einen Gehalt an Polymethacrylester von etwa 0,5 bis 5 Gew.-%.

3. Konservierungsmittel nach Anspruch 1 oder 2, dadurch gekennzeichnet, daß der Gesamtfestkörpergehalt etwa zwischen 10 und 30 Gew.-%, bevorzugt 10 bis 15 Gew.-%, liegt.

4. Konservierungsmittel nach einem der Ansprüche 1 bis 3, gekennzeichnet durch ein Dispergierhilfsmittel von etwa 0,5 bis 3 Gew.-%.

5. Konservierungsmittel nach wenigstens einem der Ansprüche 1 bis 4, gekennzeichnet durch ein Netzmittel aus einem fluorierten Alkylpolyoxyäthylenäthanol in einer Größenordnung von etwa 0,001 bis 1 Gew.-%.

-A 2-

6. Konservierungsmittel nach wenigstens einem der Ansprüche 1 bis 5, gekennzeichnet durch ein Verlaufmittel aus etwa 0,5 bis 3 Gew.-% Tributoxyäthylphosphat od. dgl.

7. Konservierungsmittel nach wenigstens einem der Ansprüche 1 bis 6, gekennzeichnet durch ein wasserverdünnbares Lösungsmittel, beispielsweise zweiwertige Alkohole, von etwa 1 bis 10 Gew.-%.

8. Konservierungsmittel nach wenigstens einem der Ansprüche 1 bis 7, gekennzeichnet durch eine metallsalzhaltige Dispersion mit etwa 10 bis 25 Gew.-% Acrylat-Copolymeren in voll entsalztem Wasser, welche zudem die Merkmale der Patentansprüche 2 bis 7 in den dort genannten Anteilsbereichen enthält.

9. Verfahren zum Beschichten einer Metalloberfläche, insbesondere einer eloxierten Aluminiumoberfläche, mit einem Konservierungsmittel nach einem der Ansprüche 1 bis 8, dadurch gekennzeichnet, daß die Oberfläche mit einem nicht perlenden Reinigungsmittel behandelt und anschließend rückstandsfrei abgezogen sowie getrocknet wird, woraufhin auf die Oberfläche 1 bis 45 $g/m^2$, bevorzugt 1 bis 10 $g/m^2$, insbesondere 1,8 bis 2,2 $g/m^2$, des Konservierungsmittels aufgebracht wird.

**0072384**

Nummer der Anmeldung

Europäisches
Patentamt

**EUROPÄISCHER RECHERCHENBERICHT**

EP 81 71 0038

| EINSCHLÄGIGE DOKUMENTE | | | KLASSIFIKATION DER ANMELDUNG (Int Cl ) |
|---|---|---|---|
| Kategorie | Kennzeichnung des Dokuments mit Angabe. soweit erforderlich. der maßgeblichen Teile | betrifft Anspruch | |
| Y | <u>GB - A - 1 604 562</u> (UNILEASE SA) <br><br> * das ganze Dokument * <br><br> -- | 1,3,7 | C 25 D 11/18 |
| Y | <u>US - A - 4 241 141</u> (DILL) <br><br> * das ganze Dokument * <br><br> -- | 1,3,4 5,6,7 | |
| Y | <u>US - A - 3 961 111</u> (SMITH) <br><br> * das ganze Dokument * <br><br> -- | 1 | **RECHERCHIERTE SACHGEBIETE (Int Cl )** |
| Y | <u>US - A - 3 672 966</u> (GEISLER) <br><br> * das ganze Dokument * <br><br> -- | 1 | C 25 D 11/18 <br>     11/24 <br> B 05 D 5/08 <br>     5/00 <br> C 09 D 5/00 |
| A | <u>DE - A - 2 434 111</u> (FARLEY) | | |
| A | <u>DE - A - 2 436 278</u> (FARLEY) <br><br><br> -------- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 10. Mai 1982 | V. LEEUWEN |

EPA form 1503.1 06.78